# EUROPÄISCHE PATENTANMELDUNG

(11) **EP 4 840 295 A1**
(43) Veröffentlichungstag der Anmeldung: **18.11.2026**
(21) Anmeldenummer: 26178036.5
(22) Anmeldetag: 11.05.2026
(51) Int. Cl.: A01G 20/47, E01H 1/08

(54) **HANDGEFÜHRTES BLASGERÄT MIT EINEM BLASROHR**

(30) Priorität: 15.05.2025 DE 102025118935
(71) Anmelder: Andreas Stihl AG & Co. KG, 71336 Waiblingen (DE)
(72) Erfinder: Bosch, Johannes, 86742 Fremdingen (DE); Junker, Sebastian, 71634 Ludwigsburg (DE); Frey, Simon, 73574 Iggingen (DE); Karl, Dennis, 74193 Schwaigern (DE); Oberhofer, Felix, 70327 Stuttgart (DE); Sieder, Leon, 73630 Remshalden (DE)
(74) Vertreter: Stock, Johannes

(57) **Zusammenfassung**

Die Erfindung betrifft ein handgeführtes Blasgerät mit einem Blasrohr (10) und einem Gehäuse (2), wobei in dem Gehäuse (2) ein Antriebsmotor (3) angeordnet ist, der ein Gebläserad (6) rotierend antreibt, wobei das Gebläserad (6) einen Luftstrom über eine Ansaugöffnung des Gehäuses (2) ansaugt und den Luftstrom über eine Ausblasöffnung des Gehäuses (2) fördert, und wobei das Blasrohr (10) mit der Ausblasöffnung des Gehäuses (2) verbunden ist, wobei das Blasrohr (10) als Teleskoprohr mit mindestens zwei Rohrsegmenten (15, 15', 15") ausgebildet ist, und mit einer Fixiervorrichtung (20), wobei die Fixiervorrichtung (20) einen Rasthebel (21) und eine mit dem Rasthebel (21) korrespondierende Haltekontur (22) umfasst, wobei die Haltekontur (22) an einem distalen Ende des distalen Rohrsegmentes (15") angeordnet ist.

## Beschreibung

Die Erfindung betrifft ein handgeführtes Blasgerät mit einem Blasrohr gemäß dem Oberbegriff des Anspruchs 1.

Aus dem Stand der Technik sind handgeführte Blasgeräte bekannt, die zum Wegblasen von Grünzeug wie Laub etc. dienen. Derartige Blasgeräte umfassen ein Blasrohr und ein Gehäuse, wobei in dem Gehäuse ein Antriebsmotor angeordnet ist. Der Antriebsmotor treibt das Gebläserad rotierend an. Das Gebläserad saugt über eine Ansaugöffnung des Gehäuses einen Luftstrom an und fördert diesen über eine Ausblasöffnung des Gehäuses. Das Blasrohr ist mit der Ausblasöffnung des Gehäuses verbunden. Das Blasrohr ist als Teleskoprohr mit zwei Rohrsegmenten ausgebildet. Somit kann das Blasrohr ein- und ausgefahren werden, wobei üblicherweise die eingefahrene Stellung des Blasrohrs zur Verstauung, die ausgefahrene Stellung des Blasrohrs für den bestimmungsgemäßen Betrieb vorgesehen ist.

Nachteilig an derartigen Blasgeräten ist, dass sich das Teleskopieren des Blasrohres teilweise sehr umständlich gestaltet oder sich das Blasrohr sogar ungewünscht auseinanderfährt. So gestaltet sich die Handhabung mit dem Blasgerät umständlich.

Es ist daher Aufgabe der Erfindung, ein gattungsgemäßes, handgeführtes Blasgerät anzugeben, das eine einfache Handhabung ermöglicht.

Diese Aufgabe wird durch ein handgeführtes Blasgerät gemäß den Merkmalen des Anspruchs 1 gelöst.

Das erfindungsgemäße handgeführte Blasgerät umfasst ein Blasrohr. Das handgeführte Blasgerät umfasst ein Gehäuse, wobei in dem Gehäuse ein Antriebsmotor angeordnet ist. Der Antriebsmotor treibt ein Gebläserad rotierend an. Das Gebläserad saugt in angetriebenem Zustand einen Luftstrom über eine Ansaugöffnung des Gehäuses an und fördert den Luftstrom über eine Ausblasöffnung des Gehäuses. Das Blasrohr ist mit der Ausblasöffnung des Gehäuses verbunden. Das Blasrohr ist als ein Teleskoprohr mit mindestens zwei Rohrsegmenten ausgebildet. Ferner umfasst das handgeführte Blasgerät eine Fixiervorrichtung. Die Fixiervorrichtung umfasst einen Rasthebel und eine mit dem Rasthebel korrespondierende Haltekontur. Die Haltekontur ist an dem distalen Ende des distalen Rohrsegmentes angeordnet.

In eingefahrener Stellung des Blasrohrs greift der Rasthebel der Fixiervorrichtung in die Haltekontur des distalen Rohrsegmentes. Der Rasthebel greift in die Haltekontur ein und sichert auf zuverlässige Weise das Blasrohr in der eingefahrenen Stellung. Der Benutzer kann durch Betätigen des Rasthebels die Fixiervorrichtung entsichern und das Blasrohr in eine ausgefahrene Stellung teleskopieren. Der Rasthebel selbst bildet ein einfaches und intuitives Bedienelement der Fixiervorrichtung, das zum einen eine intuitive Betätigung der Fixiervorrichtung erlaubt und zum anderen eine zuverlässige Sicherung des Blasrohres in eingefahrener Stellung ermöglicht.

Durch die Ausbildung der Haltekontur an dem distalen Ende des distalen Rohrsegmentes kann das distale Rohrsegment nahezu vollständig eingefahren werden, wodurch das Blasgerät besonders kompakt in eingefahrener Stellung des Blasrohres ist.

Es ist insbesondere vorgesehen, dass das Blasrohr lösbar auf einem Rohrstutzen des Blasgerätes befestigt ist. Um das Blasgerät in einen noch kompakteren Zustand zu überführen, kann das Blasrohr vom Blasgerät gelöst werden, wodurch das Blasgerät und das Blasrohr separat voneinander verräumt werden können. Ferner ist es auch möglich, ein anderes Blasrohr auf dem Blasgerät zu montieren.

Die Fixiervorrichtung ist insbesondere Bestandteil des Blasrohres und insbesondere für eine Einhandbedienung zum Einfahren und Ausfahren des Blasrohres ausgebildet. Dies ermöglicht dem Benutzer mit einer Hand das Blasgerät zu halten und mit der anderen Hand die Fixiervorrichtung zu betätigen und das Blasrohr zu teleskopieren. Ein Abstellen des Blasgerätes, beispielsweise auf einem Tisch, um mit der einen Hand die Fixiervorrichtung zu lösen und mit der anderen Hand das Blasrohr auseinanderzuziehen, ist nicht erforderlich.

Es ist insbesondere vorgesehen, dass das Blasrohr mehrere, insbesondere drei, relativ zueinander bewegbare Rohrsegmente umfasst, wobei der Rasthebel an einem proximalen Rohrsegment angeordnet ist. Die Anordnung des Rasthebels an dem proximalen Rohrsegment und die Ausbildung der Haltekontur an dem distalen Rohrsegment bedingen, dass das Blasrohr in eingefahrener Stellung mittels der Fixiervorrichtung über die äußeren Rohrsegmente gehalten sind. In anderen Worten, umfasst das Blasrohr drei oder mehr Rohrsegmente, so sind die Rohrsegmente zwischen den äußersten Rohrsegmenten, also zwischen dem proximalen und dem distalen Rohrsegment, durch die äußersten Rohrsegmente gehalten.

Es ist insbesondere vorgesehen, dass der Rasthebel um eine Schwenkachse schwenkbar gelagert ist und in eine Haltestellung zur Sicherung des Rohres in der eingefahrenen Stellung und in eine Freigabestellung zum Ausfahren des Rohres schwenkbar ist. Mit Betätigung des Rasthebels schwenkt der Benutzer den Rasthebel um eine Schwenkachse. Dabei gibt der Rasthebel das distale Rohrsegment zum Ausfahren frei.

Es ist insbesondere vorgesehen, dass der Rasthebel ein Federelement umfasst, wobei der Rasthebel mittels des Federelementes in die Haltestellung gespannt ist und über ein am Rasthebel ausgebildeten Betätigungsabschnitt entgegen der Federkraft des Federelementes in die Freigabestellung schwenkbar ist. Lässt der Benutzer den Rasthebel nach Betätigung wieder los, wird dieser durch das Federelement wieder zurückgespannt. Die Vorspannung des Rasthebels durch das Federelement bewirkt, dass der Rasthebel zuverlässig in die Haltekontur gespannt wird und somit das Blasrohr zuverlässig in eingefahrener Stellung hält.

Die korrespondierenden Wirkflächen des Rasthebels und der Haltekontur sind insbesondere gegenüber der Bewegungsrichtung der Rohrsegmente schräg angeordnet. Die Bewegungsrichtung der Rohrsegmente entspricht der Richtung der Längsmittelachse des Blasrohres. Dies ermöglicht dem Benutzer, insbesondere beim Einfahren des Blasrohres, ein Überdrücken des Rasthebels. In anderen Worten ist es beim Einfahren des Blasrohres nicht erforderlich, den Rasthebel zu betätigen. Der Rasthebel ist in seine Haltestellung vorgespannt, wobei der Rasthebel durch das Zusammenspiel der Wirkflächen von Rasthebel und Haltekontur beim Einfahren des Blasrohres entgegen der Federkraft aus der Haltekontur zurückgeschwenkt wird. Ist das distale Rohrsegment vollständig eingeschoben, schwenkt der Rasthebel zurück in die Haltekontur. Dies ermöglicht dem Benutzer ein besonders einfaches Einfahren des Blasrohres.

Die Haltekontur ist durch einen umlaufenden Kragen eines Rohrsegmentes, insbesondere durch eine Nut an einem umlaufenden Kragen eines Rohrsegmentes, ausgebildet. Der Kragen ist insbesondere durch ein Aufsatzring ausgebildet. Der Kragen überragt in radialer Richtung bezogen auf eine Längsmittelachse des Blasrohrs sämtliche Rohrsegmente, wodurch diese beim Einfahren des distalen Rohrsegmentes durch den Kragen gehalten und in das proximale Rohrsegment eingeschoben werden.

Es ist insbesondere vorgesehen, dass die mehreren Rohrsegmente über Kegelflächen miteinander befestigbar sind. Die Befestigung der mehreren Rohrsegmente über Kegelflächen erfolgt in einem ausgefahrenen Zustand des Blasrohrs. Somit wird gewährleistet, dass die einzelnen Rohrsegmente auch in ausgefahrener Stellung des Blasrohrs zuverlässig gehalten sind und ein versehentliches Teleskopieren, insbesondere Einfahren des Blasrohres, vermieden werden kann.

Es ist insbesondere vorgesehen, dass das handgeführte Blasgerät in einer vollständig ausgefahrenen Stellung des Blasrohres eine in Richtung einer Längsmittelachse des Blasrohrs gemessene, erste Gesamtlänge in einer vollständig eingefahrenen Stellung des Blasrohrs und eine in Richtung der Längsmittelachse des Blasrohres gemessene, zweite Gesamtlänge aufweist, wobei die zweite Gesamtlänge des Blasgerätes höchstens 75%, insbesondere höchstens 70% der ersten Gesamtlänge des Blasgerätes entspricht, wobei das Blasrohr in der eingefahrenen Stellung durch die Fixiervorrichtung gegen eine Ausfahrbewegung gesichert ist.

Dadurch ist das Blasrohr mit einer sehr hohen Teleskopierbarkeit versehen, die es dem Benutzer erlaubt, das Blasgerät mit Blasrohr durch Einfahren des Blasrohres in einen äußerst kompakten Zustand zu überführen. Dies vereinfacht dem Benutzer das Verräumen des Blasgerätes.

Weitere Merkmale der Erfindung ergeben sich aus der Zeichnung, in der nachfolgend ein im Einzelnen beschriebenes Ausführungsbeispiel der Erfindung dargestellt ist. Es zeigen:
- Fig. 1: in einer schematischen, perspektivischen Darstellung das erfindungsgemäße Blasgerät mit Blasrohr in eingefahrener Stellung,
- Fig. 2: in einer schematischen Seitendarstellung das Blasgerät nach Fig. 1 mit Blasrohr in ausgefahrener Stellung,
- Fig. 3: in einer schematischen Seitendarstellung das Blasgerät nach Fig. 1 mit Blasrohr in eingefahrener Stellung,
- Fig. 4: in einer schematischen Draufsicht das Blasgerät nach Fig. 1 mit Blasrohr in eingefahrener Stellung,
- Fig. 5: in einer schematischen, ausschnittsweisen Schnittdarstellung das Blasrohr montiert am Rohrstutzen in ausgefahrener Stellung,
- Fig. 6: in einer schematischen, ausschnittsweisen Schnittdarstellung gemäß Schnittlinie AA in Fig. 4 das Blasrohr montiert am Rohrstutzen in eingefahrener Stellung und
- Fig. 7 bis 9: in verschiedenen perspektivischen Darstellungen das Blasrohr in eingefahrener Stellung.

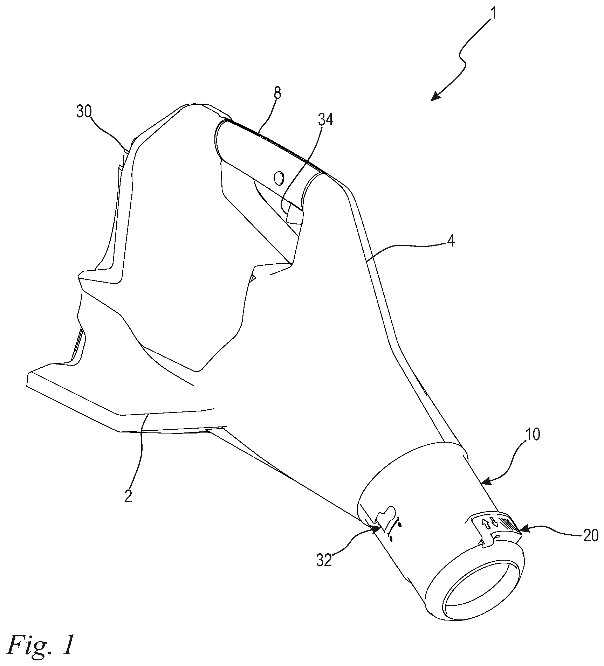

Fig. 1 zeigt ein handgeführtes, insbesondere handgetragenes Blasgerät 1. Der Begriff "handgetragen" ist derart zu verstehen, dass das Blasgerät 1 in seinem bestimmungsgemäßen Betrieb vom Benutzer getragen wird. Das Blasgerät 1 dient beispielsweise dazu, Laub oder dgl. von Wegen und Rasenflächen zu entfernen, insbesondere wegzublasen. Das Blasgerät 1 umfasst ein Gehäuse 2 sowie ein am Gehäuse 2 angeordnetes Blasrohr 10. Das Gehäuse 2 umfasst einen Gehäusegrundkörper 4. An dem Gehäusegrundkörper 4 ist ein Handgriff 8 ausgebildet. Der Handgriff 8 dient zum Tragen und Führen des Blasgerätes 1. In einer alternativen Ausführung des Blasgerätes 1 kann auch ein weiterer Handgriff vorgesehen sein.

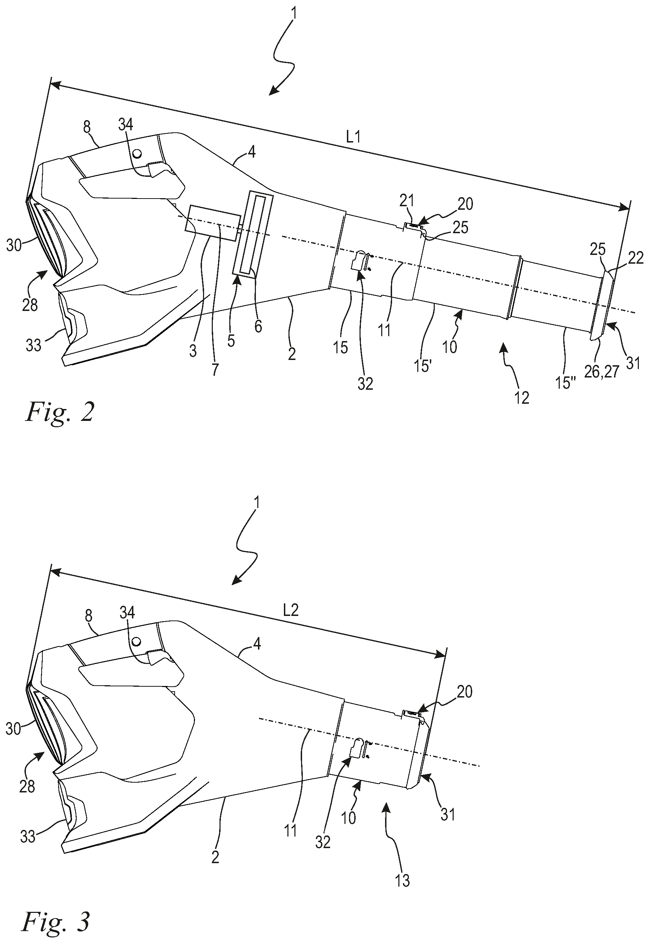

Wie in Fig. 2 schematisch angedeutet, umfasst das Blasgerät 1 ein Gebläse 5. Das Gebläse 5 weist ein Gebläserad 6 auf. In der bevorzugten Ausführung des Blasgerätes 1 ist das Gebläse 5 im Gehäusegrundkörper 4 angeordnet. In einer alternativen Ausführung kann es auch vorgesehen sein, dass das Gebläse 5 außerhalb des Gehäusegrundkörpers 4 angeordnet ist.

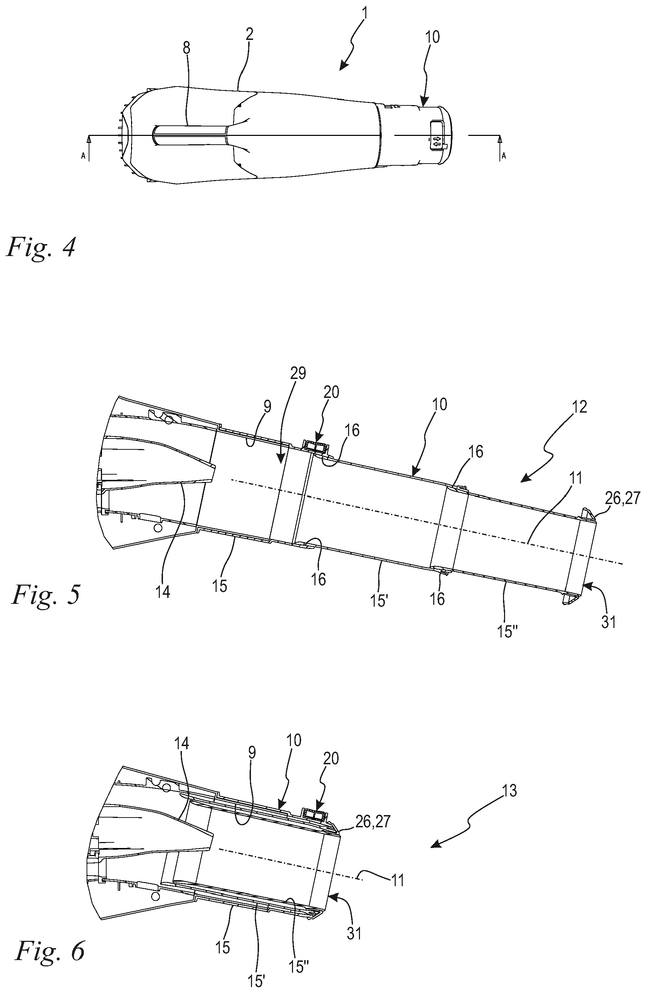

Das Gebläse 5 dient zur Erzeugung eines Luftstromes. Der Luftstrom wird durch Rotation des Gebläserads 6 erzeugt und über eine Ansaugöffnung 28 am Gehäuse 2, insbesondere am Gehäusegrundkörper 4, angesaugt. Ferner fördert das rotierende Gebläserad 6 den Luftstrom weiter bis zu einer Ausblasöffnung 29 (Fig. 5) am Gehäuse 2, insbesondere am Gehäusegrundkörper 4. In der Ansaugöffnung 28 ist ein Ansauggitter 30 als Eingriffsschutz vorgesehen. An der Ausblasöffnung 29 des Gehäuses 2 verläuft der Luftstrom in einem Blasrohr 10 und tritt an einer Blasrohröffnung 31 in die Außenumgebung des Blasgerätes 1 aus. Der dann aus der Blasrohröffnung 31 des Blasrohrs 10 austretende Luftstrom kann dann zum Wegblasen von Laup und dgl. verwendet werden.

Wie in den Figuren 1 bis 3 gezeigt, ist das Blasrohr 10 an dem Gehäuse 2, insbesondere an dem Gehäusegrundkörper 4 des Gehäuses 2, angeordnet. Hierfür ist an dem Gehäuse 2 ein Rohrstutzen 9 ausgebildet (Figuren 5 und 6), auf dem das Blasrohr 10 befestigbar ist. Das Blasrohr 10 ist insbesondere lösbar an dem Gehäuse 2, insbesondere an dem Gehäusegrundkörper 4, befestigt. Im bevorzugten Ausführungsbeispiel ist das Blasrohr 10 über einen Bajonettverschluss 32 an dem Gehäusegrundkörper 4 befestigt. Auch andere reversible Verbindungen, die eine Haltesicherung des Blasrohres 10 auf dem Rohrstutzen 9 bilden, können zweckmäßig sein. Das Blasrohr 10 ist vorzugsweise aus Kunststoff gebildet. Auch alternative Werkstoffe können zweckmäßig sein.

Wie in Fig. 2 gezeigt, umfasst das Blasgerät 1 einen Antriebsmotor 3, der das Gebläserad 6 um eine Drehachse 7 rotierend antreibt. Der Antriebsmotor 3 ist lediglich schematisch dargestellt. Der Antriebsmotor 3 ist Teil des Gebläses 5. Das Gebläse 5 ist in der vorliegenden Ausführung als ein Axialgebläse vorgesehen. In einer alternativen Ausführung des Blasgerätes 1 kann das Gebläse 5 auch als ein Radialgebläse ausgebildet sein. Der Antriebsmotor 3 ist vorliegend als ein Elektromotor ausgebildet. In einer alternativen Ausführung kann der Antriebsmotor 3 auch als ein Verbrennungsmotor ausgebildet sein. Zur Versorgung des Antriebsmotors 3 mit elektrischer Energie umfasst das Blasgerät 1 mindestens einen Akkupack 33. Es kann auch vorgesehen sein, dass das Blasgerät 1 mehrere Akkupacks 33 umfasst. Auch eine andere Versorgung des Antriebsmotors 3 mit elektrischer Energie kann zweckmäßig sein, beispielsweise durch die Anbindung des Blasgeräts 1 mittels eines Kabels an ein vorhandenes Stromnetz oder an mittels einer zusätzlichen Tragvorrichtung getragener Akkupacks. Das Gehäuse 2 umfasst einen Akkuschacht, in dem der Akkupack 33 zur Versorgung des Antriebsmotors mit elektrischer Energie einsteckbar ist.

Wie in den Figuren 1 bis 3 gezeigt, umfasst das Blasgerät 1 ein Bedienelement 34 zur Steuerung des Antriebsmotors 3. Der Benutzer steuert mittels des Bedienelements 34 insbesondere die Drehzahl des Antriebsmotors 3. Das Bedienelement 34 ist im bevorzugten Ausführungsbeispiel als Bedienhebel, insbesondere als Schwenkhebel, ausgebildet. In einer alternativen Ausführung kann das Bedienelement 34 auch als Schieber, Taster, Knopf oder dgl. Bauelement ausgebildet sein. Das Bedienelement 34 ist dem Handgriff 8 zugeordnet, d. h. der Benutzer kann, wenn er den Handgriff 8 mit einer Hand umgreift, mit selbiger Hand das Bedienelement 34 betätigen. Das Bedienelement 34 ist vorzugsweise zumindest teilweise am Handgriff 8 angeordnet. Durch die Zuordnung des Bedienelements 34 zum Handgriff 8 ist dieser als Bediengriff ausgebildet.

Wie in den Figuren 2 und 3 gezeigt, ist das Blasrohr 10 als ein Teleskoprohr ausgebildet. Das Blasrohr 10 ist in eine ausgefahrene Stellung 12 ausfahrbar, wie in Fig. 2 gezeigt. Ferner ist das Blasrohr 10 in eine eingefahrene Stellung 13 einfahrbar, wie in Fig. 3 gezeigt. Das Blasrohr 10 umfasst mindestens zwei Rohrsegmente 15, 15', 15". Die mindestens zwei Rohrsegmente 15, 15', 15" sind ineinander verschiebbar. In der vorliegenden, bevorzugten Ausführung des Blasrohres 10 umfasst dieses drei Rohrsegmente 15, 15', 15", die relativ zueinander bewegbar sind. In einer alternativen Ausführung des Blasrohres 10 kann es auch vorgesehen sein, dass das Blasrohr 10 mehr als drei Rohrsegmente 15, 15', 15" umfasst. Teile der Rohrsegmente 15, 15', 15" sind ein proximales Rohrsegment 15 und ein distales Rohrsegment 15". Das proximale Rohrsegment 15 ist zur Anordnung auf dem Rohrstutzen 9 ausgebildet, wodurch das gesamte Blasrohr 10 über das proximale Rohrsegment 15 an dem Gehäuse 2, insbesondere auf dem Rohrstutzen 9 des Gehäuses 2 gehalten ist. Das distale Rohrsegment 15" ist zumindest in ausgefahrener Stellung 12 das Rohrsegment mit der Blasrohröffnung 31. Das distale Rohrsegment 15" des Blasrohres 10 weist zumindest in ausgefahrener Stellung 12 einen größeren Abstand zum Gehäuse als die restlichen Rohrsegmente 15, 15' des Blasgerätes 10 auf. In der vorliegenden Ausführung ist zwischen dem proximalen Rohrsegment 15 und dem distalen Rohrsegment 15" ein mittleres Rohrsegment 15' angeordnet. Die Rohrsegmente 15, 15', 15" sind derart bewegbar zueinander ausgebildet, dass diese in sich zusammengeschoben die eingefahrene Stellung 13 des Blasgerätes 10 einnehmen. Sind die Rohrsegmente 15, 15', 15" ausgefahren, befindet sich das Blasgerät 10 in der ausgefahrenen Stellung 12.

Wie in den Figuren 1 bis 3 gezeigt, umfasst das Blasgerät eine Fixiervorrichtung 20. Die Fixiervorrichtung ist dazu ausgebildet, die Rohrsegmente 15, 15', 15" in eingefahrener Stellung 13 des Blasrohres 10 zu fixieren, so dass ein ungewolltes Ausfahren der Rohrsegmente 15, 15', 15" vermieden werden kann. Ferner ist die Fixiervorrichtung 20 derart ausgebildet, dass die Fixiervorrichtung 20 entsichert die Rohrsegmente 15, 15', 15" freigibt, wodurch die Rohrsegmente 15, 15', 15" ausfahrbar sind. Hierfür ist die Fixiervorrichtung 20 zu betätigen. In der betätigten Stellung der Fixiervorrichtung 20 sind die einzelnen Rohrsegmente 15, 15', 15" von der Fixiervorrichtung 20 freigegeben bzw. von dieser nicht mehr gehalten.

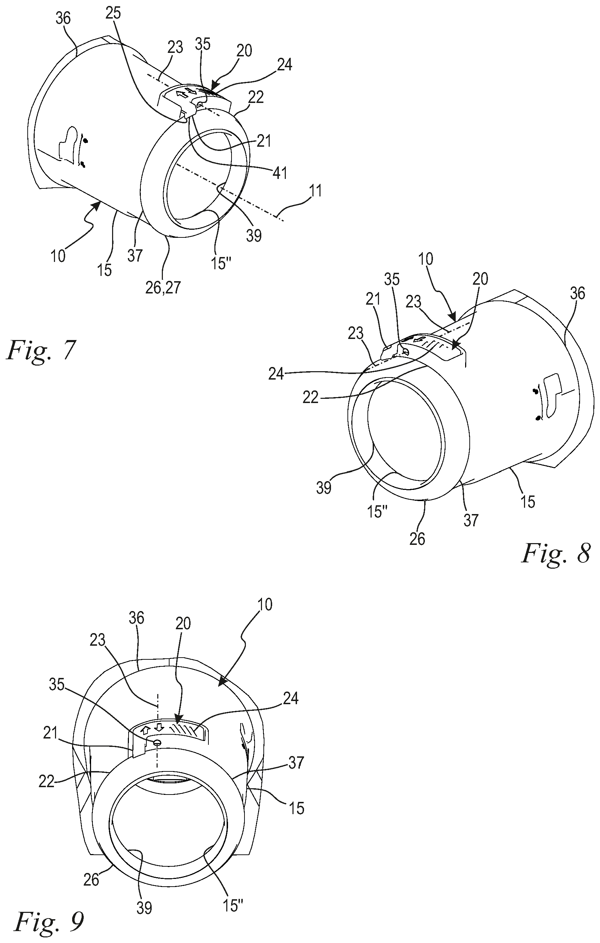

Wie insbesondere in den Figuren 7 bis 9 gezeigt, umfasst die Fixiervorrichtung 20 einen Rasthebel 21 und eine mit dem Rasthebel 21 korrespondierende Haltekontur 22. Die Haltekontur 22 ist an dem distalen Rohrsegment 15" angeordnet. Besonders bevorzugt ist der Rasthebel an dem proximalen Rohrsegment 15 angeordnet. In einer alternativen Ausgestaltung kann der Rasthebel 21 auch an dem Gehäuse 2 des Blasgerätes 1 angeordnet sein. Der Rasthebel 21 ist insbesondere um eine Schwenkachse 23 schwenkbar gelagert. Der Rasthebel 21 ist insbesondere an einem Lagerstift 35 schwenkbar gelagert. Die Schwenkachse 23 des Rasthebels 21 ist vorzugsweise parallel zur Längsmittelachse 11 des Blasrohrs 10 ausgebildet. Der Rasthebel 21 ist in eine Haltestellung zur Sicherung des Blasrohres 10 in der eingefahrenen Stellung 13 des Blasrohres 10 schwenkbar. Ferner ist der Rasthebel 21 in eine Freigabestellung zur Freigabe des Blasrohres 10 bzw. zum Ausfahren des Blasrohres 10 schwenkbar.

Ferner umfasst der Rasthebel 21 ein nicht näher dargestelltes Federelement. Durch das Federelement ist der Rasthebel 21 in die Haltestellung gespannt. An dem Rasthebel 21 ist ein Betätigungsabschnitt 24 ausgebildet. Um den Rasthebel 21 von der Haltestellung in die Freigabestellung zu schwenken, muss der Benutzer den Betätigungsabschnitt 24 betätigen, insbesondere drücken. Dabei schwenkt der Rasthebel 21 um die Schwenkachse 23 in die Freigabestellung. Lässt der Benutzer den Betätigungsabschnitt 24 wieder los, so wird der Rasthebel 21 durch das Federelement wieder in die Haltestellung bewegt. Um den Rasthebel 21 in die Freigabestellung zu drücken, muss der Benutzer die vom Federelement ausgehende Federkraft überwinden. Der Rasthebel 21 ist derart ausgebildet, dass dieser mit nur einer Hand, insbesondere mit nur einem Finger betätigbar ist. So kann der Rasthebel 21 mit einer Hand betätigt werden und zugleich mit derselben Hand das Blasrohr 10 auseinandergefahren werden.

Das Blasrohr 10 ist insbesondere derart ausgebildet, dass es durch die Kraft des Luftstromes ausfahrbar ist. Um also das Blasrohr 10 nicht von Hand ausfahren zu müssen, kann der Benutzer mit seiner einen Hand den Rasthebel 21 betätigen und mit seiner anderen Hand das Bedienelement 34. Das Gebläse 5 wird aktiviert, wodurch der Luftstrom erzeugt wird. Da durch Betätigung des Rasthebels 21 die Rohrsegmente 15, 15', 15" zum Ausfahren freigegeben sind, werden diese bereits durch die Blaskraft auseinandergeschoben und damit ausgefahren.

Wie insbesondere in Fig. 7 gezeigt, umfasst der Rasthebel 21 eine Eingreifkontur 41. Die Eingreifkontur 41 ist in etwa hakenförmig ausgebildet. Der Kopf der hakenförmigen Eingreifkontur 41 ist keilförmig ausgebildet und zum Eingriff in die Haltekontur 22 vorgesehen. Betätigt der Benutzer den Rasthebel 21 am Betätigungsabschnitt 24, wird die Eingreifkontur 41 mit dem keilförmigen Kopf aus der Haltekontur 22 herausgeschwenkt. Lässt der Benutzer den Betätigungsabschnitt 24 frei, wird die Eingreifkontur 41 mit ihrem keilförmigen Kopf wieder in die Haltekontur 22 mittels des Federelementes geschwenkt, insbesondere gedrückt.

Wie in den Figuren 7 bis 9 gezeigt, erstreckt sich das proximale Rohrsegment 15 von einem proximalen Ende 36 bis hin zu einem distalen Ende 37, wobei das proximale Ende 36 unmittelbar am Gehäuse 2 anliegt. Der Rasthebel 21 ist an dem distalen Ende 37 des proximalen Rohrsegmentes 15 angeordnet. Die Haltekontur 22 ist in eingefahrener Stellung des Blasrohres 10 unmittelbar benachbart zum distalen Ende 37 des proximalen Rohrsegmentes 15 angeordnet. Somit kann der Rasthebel 21 in eingefahrener Stellung 13 des Blasrohres 10 in die Haltekontur 22 eingreifen.

Wie insbesondere in Fig. 2 gezeigt, ist die Haltekontur 22 am distalen Rohrsegment 15" angeordnet. Besonders bevorzugt ist die Haltekontur 22 an einem distalen Ende 39 des distalen Rohrsegmentes 15" angeordnet. Das distale Ende 39 des distalen Rohrsegmentes 15" ist ein freies Ende. An diesem Ende ist die Blasrohröffnung 31 vorgesehen. Die Haltekontur 22 ist durch einen umlaufenden Kragen 26 eines Rohrsegmentes 15", wie vorliegend insbesondere des distalen Rohrsegmentes 15" ausgebildet. An dem Kragen 26 ist eine Nut ausgebildet. Der Rasthebel 21, insbesondere die Eingreifkontur 41, ist dazu vorgesehen, in die Nut des Kragens 26 einzugreifen, wodurch die Rohrsegmente 15, 15', 15" in der eingefahrenen Stellung 13 des Blasrohres 10 gesichert sind.

Die Figuren 5 und 6 zeigen eine Schnittdarstellung des Blasrohrs 10. Der in Fig. 6 gezeigte Schnitt verläuft entlang der Schnittlinie A-A in Fig. 4. Wie in den Figuren 5 und 6 gezeigt, ist der Kragen 26 durch einen Aufsatzring 27 gebildet. Der Kragen 26 übergreift in radialer Richtung nach außen bezogen auf die Längsmittelachse 11 des Blasrohres 10 sämtliche Rohrsegmente 15, 15', 15". Die einzelnen Rohrsegmente 15, 15' sind in eingefahrener Stellung 13 des Blasrohres 10 in dem Kragen 26 gehalten.

Wie in Fig. 5 gezeigt, sind die miteinander korrespondierenden Enden der einzelnen Rohrsegmente 15, 15', 15" als Kegelflächen 16 ausgebildet. Befindet sich das Blasrohr 10 in ausgefahrener Stellung 12 greifen die Kegelflächen 16 der benachbarten Rohrsegmente 15, 15', 15" ineinander und bewirken eine Klemmung. Somit sind die Rohrsegmente 15, 15', 15" durch die Kegelflächen 16 gegenseitig geklemmt gehalten. Ein versehentliches Einfahren des Blasrohres 10 im Betrieb des Blasgerätes 1 kann somit vermieden werden. Zum Einfahren des Blasrohres 10 ist ein erhöhter Druck auf das distale Rohrsegment 15" in Richtung der Längsmittelachse 11 zum Gehäuse 2 hin erforderlich. Ferner sind die Rohrsegmente 15, 15', 15" durch die Kegelflächen 16 spielfrei gehalten.

Wie insbesondere in Figur 2 gezeigt, sind die korrespondierenden Wirkflächen 25 des Rasthebels 21 und der Haltekontur 22 als keilförmige Flächen ausgebildet. Die Rohrsegmente 15, 15', 15" werden in Richtung der Längsmittelachse 11 verschoben. Die korrespondierenden Wirkflächen 25 sind nun so ausgebildet, dass diese schräg zur Längsmittelachse 11 ausgerichtet sind. Beim Zusammenschieben der Rohrsegmente 15, 15', 15" drückt die schräg zur Längsmittelachse 11 ausgerichtete Wirkfläche 25 des Kragens 26 die schräg zur Längsmittelachse 11 ausgerichtete Wirkfläche 25 des Rasthebels 21, insbesondere der Eingreifkontur 41 des Rasthebels 21, axial nach außen, bis der Kragen 26 am proximalen Rohrsegment 15 anschlägt und der Rasthebel 21 in die Haltekontur 22 verrastet. Um die Rohrsegmente 15, 15', 15" in der eingefahrenen Stellung 13 des Blasrohres 10 durch den Rasthebel 21 zu sichern, ist eine Betätigung von Hand des Rasthebels 21 somit nicht erforderlich.

Wie in den Figuren 2 und 3 gezeigt, weist das Blasgerät 1 in der vollständig ausgefahrenen Stellung 12 des Blasrohres 10 eine in Richtung der Längsmittelachse 11 des Blasrohrs 10 gemessene, erste Gesamtlänge L1 auf. In der vollständig eingefahrenen Stellung 13 des Blasrohres 10 weist das Blasgerät 1 eine in Richtung der Längsmittelachse 11 des Blasrohres 10 gemessen, zweite Gesamtlänge L2 auf. Die zweite Gesamtlänge L2 des Blasgerätes 1 entspricht höchstens 75%, insbesondere höchstens 70% der ersten Gesamtlänge L1 des Blasgerätes 1. Somit ist eine hohe Teleskopierbarkeit des Blasrohres 10 gewährleistet.

Wie in Fig. 6 gezeigt, umfasst das Blasgerät 10 einen Leitkonus 14, an dem der Luftstrom entlangströmt. Das Blasgerät 10 lässt sich derart einfahren, dass mindestens ein Rohrsegment 15, 15', 15", vorzugsweise alle Rohrsegmente 15, 15', 15" in Richtung der Längsmittelachse 11 des Blasrohrs 10 mit dem Leitkonus 14 überlappen. Der Betrieb des Blasgerätes 1 ist auch in eingefahrener Stellung 13 möglich, auch wenn es hierbei zu geringfügigen Strömungsverlusten kommt.

Wie in Fig. 6 gezeigt, sind in eingefahrener Stellung 13 des Blasrohres 10 das mittlere Rohrsegment 15' und das distale Rohrsegment 15" zumindest teilweise radial innerhalb des Rohrstutzens 9 angeordnet sind. Das proximale Rohrsegment 15 sitzt auf dem Rohrstutzen 9 auf. Somit ist das proximale Rohrsegment 15 zumindest teilweise axial außerhalb des Rohrstutzens 9 angeordnet. Ferner sind die Rohrsegmente 15, 15', 15" in Richtung der Längsmittelachse 11 des Blasrohres 10 in eingefahrener Stellung 13 zumindest teilweise im Gehäuse 2, insbesondere im Rohrstutzen 9 des Gehäuses 2 angeordnet.

## Patentansprüche

1. Handgeführtes Blasgerät mit einem Blasrohr (10) und einem Gehäuse (2), wobei in dem Gehäuse (2) ein Antriebsmotor (3) angeordnet ist, der ein Gebläserad (6) rotierend antreibt,
wobei das Gebläserad (6) einen Luftstrom über eine Ansaugöffnung des Gehäuses (2) ansaugt und den Luftstrom über eine Ausblasöffnung des Gehäuses (2) fördert,
und wobei das Blasrohr (10) mit der Ausblasöffnung des Gehäuses (2) verbunden ist,
wobei das Blasrohr (10) als Teleskoprohr mit mindestens zwei Rohrsegmenten (15, 15', 15") ausgebildet ist,
und mit einer Fixiervorrichtung (20),
**dadurch gekennzeichnet, dass** die Fixiervorrichtung (20) einen Rasthebel (21) und eine mit dem Rasthebel (21) korrespondierende Haltekontur (22) umfasst, wobei die Haltekontur (22) an einem distalen Ende des distalen Rohrsegmentes (15") angeordnet ist.

2. Blasgerät nach Anspruch 1,
**dadurch gekennzeichnet, dass** das Blasrohr (10) lösbar auf einem Rohrstutzen (9) des Blasgerätes (1) befestigt ist.

3. Blasgerät nach Anspruch 1 oder 2,
**dadurch gekennzeichnet, dass** die Fixiervorrichtung (20) Bestandteil des Blasrohres (10) ist und für eine Einhandbedienung zum Einfahren und Ausfahren des Blasrohres (10) ausgebildet ist.

4. Blasgerät nach einem der Ansprüche 1 bis 3,
**dadurch gekennzeichnet, dass** das Blasrohr (10) mehrere, insbesondere drei, relativ zueinander bewegbare Rohrsegmente (15, 15', 15") umfasst, wobei der Rasthebel (21) an einem proximalen Rohrsegment (15) angeordnet ist.

5. Blasgerät nach einem der Ansprüche 1 bis 4,
**dadurch gekennzeichnet, dass** der Rasthebel (21) um eine Schwenkachse (23) schwenkbar gelagert ist, und zwischen einer Haltestellung zur Sicherung des Blasrohres (10) in der eingefahrenen Stellung (13) und einer Freigabestellung zum Ausfahren des Blasrohres (10) schwenkbar ist.

6. Blasgerät nach Anspruch 5,
**dadurch gekennzeichnet, dass** der Rasthebel (21) ein Federelement umfasst, wobei der Rasthebel (21) mittels des Federelementes in die Haltestellung gespannt ist und über einen am Rasthebel (21) ausgebildeten Betätigungsabschnitt (24) entgegen der Federkraft des Federelementes in die Freigabestellung schwenkbar ist.

7. Blasgerät nach einem der Ansprüche 1 bis 6,
**dadurch gekennzeichnet, dass** korrespondierende Wirkflächen (25) des Rasthebels (21) und der Haltekontur (22) gegenüber der Bewegungsrichtung der Rohrsegmente (15, 15', 15") in Richtung einer Längsmittelachse (11) des Blasrohres (10) schräg angeordnet sind.

8. Blasgerät nach einem der Ansprüche 1 bis 7,
**dadurch gekennzeichnet, dass** die Haltekontur (22) durch einen umlaufenden Kragen (26) eines Rohrsegmentes (15, 15', 15"), insbesondere durch eine Nut an einem umlaufenden Kragen (26) eines Rohrsegmentes (15, 15', 15"), ausgebildet ist, wobei der Kragen (26) insbesondere durch einen Aufsatzring (27) ausgebildet ist.

9. Blasgerät nach einem der Ansprüche 1 bis 8,
**dadurch gekennzeichnet, dass** die mehreren Rohrsegmente (15, 15', 15") über Kegelflächen (16) miteinander befestigbar sind.

10. Blasgerät nach einem der Ansprüche 1 bis 9,
**dadurch gekennzeichnet, dass** das Blasgerät (1) in einer vollständig ausgefahrenen Stellung (12) des Blasrohres (10) eine in Richtung einer Längsmittelachse (11) des Blasrohres (10) gemessene, erste Gesamtlänge (L1) und in einer vollständig eingefahrenen Stellung (13) des Blasrohres (10) eine in Richtung der Längsmittelachse (11) des Blasrohres (10) gemessene, zweite Gesamtlänge (L2) aufweist, wobei die zweite Gesamtlänge (L2) des Blasgerätes (1) höchstens 75%, insbesondere höchstens 70% der ersten Gesamtlänge (L1) des Blasgerätes (1) entspricht, wobei das Blasrohr (10) in der eingefahrenen Stellung (13) durch die Fixiervorrichtung (20) gegen eine Ausfahrbewegung gesichert ist.
